# EUROPÄISCHE PATENTSCHRIFT

(11) **EP 1 623 923 B1**
(45) Veröffentlichungstag und Bekanntmachung des Hinweises auf die Patenterteilung: **13.02.2008**
(21) Anmeldenummer: 05014418.7
(22) Anmeldetag: 02.07.2005
(51) Int. Cl.: B64D 11/06

(54) **System zur Einstellung der Position mindestens einer Sitzkomponente eines Fahrgastsitzes sowie zugehörige gemeinsame Steuereinheit**
System for adjusting the position of at least one seat component of a passenger seat and associated common control unit
Système pour régler la position d'au moins une composante d'un siège de passager ainsi qu'une unité de contrôle commun correspondante

(30) Priorität: 04.08.2004 DE 102004037674
(43) Veröffentlichungstag der Anmeldung: 08.02.2006
(73) Patentinhaber: Recaro Aircraft Seating GmbH & Co. KG, 74523 Schwäbisch Hall (DE)
(72) Erfinder: Krämer, Marco, 74549 Wolpertshausen (DE)
(74) Vertreter: Bartels & Partner

(56) Entgegenhaltungen:
- GB-A- 2 334 673
- US-A1- 2003 075 964
- US-A1- 2004 077 308
- US-B1- 6 194 853

## Beschreibung

Die Erfindung betrifft ein System zur Einstellung der Position mindestens einer Sitzkomponente eines Fahrgastsitzes sowie eine zugehörige gemeinsame Steuereinheit.

Fahrgastsitze, insbesondere Fluggastsitze, dieser Art sind als Bestuhlung von Fahrzeugen, insbesondere Luftfahrzeugen der gewerblichen Luftfahrt, in großem Umfang in Gebrauch. Insbesondere bei Verkehrsflugzeugen für den Mittelstrecken- und den Langstreckenbetrieb sind bei solchen Sitzen im Interesse der Erhöhung des Sitzkomforts mehrere Sitzkomponenten in solcher Weise lageverstellbar angeordnet, dass der Fluggast für bestimmte Sitzkomponenten, wie beispielsweise die Rückenlehne, das Sitzteil und andere, Positionen einstellen kann, durch die ein Höchstmaß an Bequemlichkeit erreicht wird.

Um die Einstellung der Position der betreffenden Sitzkomponenten für den Fluggast möglichst einfach und bequem zu gestalten, werden vielfach elektromotorisch betätigte Stelleinrichtungen benutzt, so dass der Fluggast für Einstellmaßnahmen lediglich Bedienelemente betätigen muß. Aus Sicherheitsgründen ist es bekanntermaßen erforderlich, dass während bestimmter Phasen des Flugbetriebes, beispielsweise bei Start und Landung, die lageverstellbaren Sitzkomponenten in eine vorgegebene Sicherheits-Ausgangsposition einnehmen müssen. Es ist wünschenswert, eine solche Einstellung für mehrere Fluggastsitze gemeinsam vorzunehmen. Hierfür ist es erforderlich, die Sitzsteuerungen der einzelnen Fluggastsitze miteinander und mit einer gemeinsamen Steuereinheit zu einem gattungsgemäßen System zu verbinden, was einen erheblichen Planungs- und Montageaufwand darstellt, insbesondere weil diese Verbindungen von Luftfahrzeug zu Luftfahrzeug individuell zu planen und durchzuführen ist.

Die US-B1-6 194 853 zeigt eine Anlage zur Steuerung mindestens eines Sitzmoduls, wobei ein Sitzmodul zwei oder vier nebeneinander angeordnete motorbetriebene Sitze umfasst. Hierbei ist jedem Sitzmodul eine Steuereinheit zur Steuerung der Stellglieder des zugeordneten Sitzmoduls zugeordnet. Die Steuereinheiten aller Sitzmodule des Flugzeugs sind über einen externen Bus mit einer zentralen Verwaltungseinheit verbunden. Für die Bewegung der einzelnen beweglichen Elemente besitzt jeder der Sitze ein Stellglied zur Bewegung der Fußstütze, der Beinstütze sowie zum Neigen der Rückenlehne. Eine Steuertastatur, die auf der Armlehne jedes Sitzes installiert ist, besitzt für jedes Stellglied des Sitzes zwei Steuerknöpfe, die die Bewegung des zugeordneten Stellgliedes in zwei entgegengesetzte Richtungen gestatten. Der externe Bus 20 ist hierbei durch drahtförmige Träger für die Übertragung von Informationen zwischen den Steuereinheiten und der zentralen Verwaltungseinheit gebildet. In einer alternativen Ausführungsform kann der Bus auch entfallen, und die zentrale Verwaltungseinheit wird in diesem Fall nacheinander an die Steuereinheiten jedes Sitzmoduls mithilfe eines angepassten Verbinders angeschlossen.

Die US 2003/075964 A1 zeigt ein System zur Steuerung der Bewegung von einem oder mehreren Fahrzeugsitzen. Hierbei ist die Steuereinheit jedes Sitzes mit den Steuereinheiten anderer Sitze und/oder zumindest einer zentralen Steuereinheit durch einen Bus verbunden.

Durch die US 2004/007308 A1 ist eine drahtlose Datenübertragung zwischen Sitzreihen in einem Flugzeug bekannt. Hierbei kann der Sitzbenutzer über eine an der Armlehne seines Sitzes angebrachte Passagiersteuereinheit (PCU) die Inhalte wählen, die an einer an der Rückseite des vor ihm angeordneten Sitzes befestigten Videoanzeigeeinheit (VDU) dargestellt werden. Die Übertragung von der Passagiersteuereinheit zur Videoanzeigeeinheit sowie die Übertragung von darzustellenden Inhalten zur Videoanzeigeeinheit erfolgen hierbei drahtlos.

Der Erfindung liegt daher die Aufgabe zugrunde, ein gattungsgemäßes System und eine zugehörige gemeinsame Steuereinheit bereitzustellen, welche die Nachteile des Standes der Technik überwinden.

Insbesondere sollen die Planung und Montage solcher Systeme vereinfacht und beschleunigt werden. Darüber hinaus soll dauerhaft ein zuverlässiger Betrieb gewährleistet sein. In einer besonderen Ausführungsart sollen die Anwendungsmöglichkeiten solcher Systeme außerdem erhöht werden, insbesondere neben den Steuerungsmöglichkeiten auch Diagnosemöglichkeiten bereitgestellt werden.

Diese Aufgabe ist durch das im Anspruch 1 bestimmte System und durch die im nebengeordneten Anspruch bestimmte gemeinsame Steuereinheit gelöst. Besondere Ausführungsarten der Erfindung sind in den Unteransprüchen bestimmt.

Die Aufgabe ist bei einem System zur Einstellung der Position mindestens einer Sitzkomponente, wie beispielsweise Kopfstütze, Rückenlehne, Sitzteil, Beinauflage oder Fußstütze, eines Fahrgastsitzes eines Fahrzeuges, insbesondere eines Fluggastsitzes eines Luftfahrzeuges, mittels Aktuatoren, wobei lokal an dem Fahrgastsitz eine Sitzsteuerung anordbar ist mit mindestens einem von dem Fahrgast zu betätigenden Bedienelement, und wobei zwischen den Sitzsteuerungen von mehreren Fahrgastsitzen, vorzugsweise von allen Fahrgastsitzen des Fahrzeuges, und einer gemeinsamen Steuereinheit Daten übertragbar sind, einschließlich Daten betreffend die Position der Sitzkomponenten und/oder Daten betreffend die Ansteuerung der Aktuatoren, dadurch gelöst, dass die Sitzsteuerung und die gemeinsame Steuereinheit jeweils eine Datenübertragungseinheit zur drahtlosen Datenübertragung aufweisen.

Durch die erfindungsgemäß mindestens abschnittsweise drahtlose Datenübertragung können insbesondere unmittelbar am Fahrgastsitz anzuordnende drahtgebundene elektrische Leitungen und vor allem die zugehörigen Verbindungen und Kontaktelemente vermieden werden, die in der Praxis immer wieder Probleme aufgrund von Korrosion, Kontaktbruch und dergleichen verursachen können. Vor allem aber entfällt das aufwändige Montieren von Anschlussleitungen, die nach dem Stand der Technik an jeden Sitz individuell herangeführt und mit der Sitzsteuerung verbunden werden müssen; die zugehörige Leitungsverlegung ist nicht nur von Typ zu Typ des Fahrzeuges unterschiedlich, sondern darüber hinaus noch abhängig von der Bestuhlung des Fahrzeuges, die insbesondere von Luftfahrtgesellschaft zu Luftfahrtgesellschaft unterschiedlich ist. Durch die Erfindung ist es möglich, den Fahrgastsitz zusammen mit der zugehörigen Datenübertragungseinheit als Baueinheit wahlfrei in dem Fahrzeug anzuordnen, was insbesondere bei Luftfahrzeugen vorteilhaft ist.

Ein weiterer Vorteil besteht darin, dass die Datenübertragungsrate sehr hoch gewählt werden kann und dennoch betriebssichere und kostengünstige Sende- und Empfangselemente für die Datenübertragungseinheit des Fluggastsitzes eingesetzt werden können. Die Sende- und Empfangsfrequenzen können fest vorgegeben sein, insbesondere bereits vor der Montage des Fahrgastsitzes in dem Fahrzeug festgelegt sein. Alternativ hierzu ist es möglich, die Sende- und Empfangsfrequenzen erst nach dem Einbau der Fahrgastsitze in das Fahrzeug festzulegen, beispielsweise in die jeweilige Sitzsteuerung zu programmieren.

Für die drahtlose Datenübertragung kommt sowohl ein Frequenzmultiplexverfahren als auch ein Zeitmultiplexverfahren in Betracht. Vorzugsweise kann jedenfalls die Sitzsteuerung des Fahrgastsitzes gleichzeitig sowohl senden als auch empfangen. In einer besonderen Ausführungsart gilt dies auch für die gemeinsame Steuereinheit.

Für viele Anwendungen wird es vorteilhaft sein, wenn beispielsweise für das Senden von Daten von der gemeinsamen Steuereinheit eine bestimmte Sendefrequenz oder ein zugehöriger Sendekanal vorgegeben ist. Auf dieser Frequenz kann in einer Art Zeitmultiplexverfahren für jede Sitzsteuerung ein bestimmter Zeitschlitz reserviert sein, in dem die für den jeweiligen Fahrgastsitz relevanten Daten übertragen werden. Alternativ hierzu kann es vorteilhaft sein, wenn einer von der gemeinsamen Steuereinheit gesendeten Nachricht ein Adressfeld vorgeschaltet ist, in dem die Adressen jener Sitze angegeben sind, für welche die gesendete Nachricht bestimmt sind. Die Sitzsteuerungen empfangen diesen Sendekanal und entnehmen bei Übereinstimmung im Adressfeld die für sie bestimmte Nachricht, beispielsweise Steuerdaten für die Aktuatoren.

Die von der gemeinsamen Steuereinheit an die Sitzsteuerungen übertragenen Daten betreffen vor allem das Ansteuern einzelner oder mehrerer Aktuatoren des betreffenden Sitzes. Dies kann nicht nur zum Einstellen der gewünschten Position, beispielsweise zum Einstellen einer vorgegebenen Sicherheits-Ausgangsposition erfolgen, sondern auch zu Diagnosezwecken, beispielsweise zum Überprüfen der Funktionsfähigkeit einzelner Aktuatoren. Außerdem kann auf dem Wege der drahtlosen Datenübertragung die Sitzsteuerung diagnostiziert werden und/oder eine aktualisierte Steuersoftware an die Sitzsteuerung übertragen werden.

In einer besonderen Ausführungsart der Erfindung weist die Datenübertragungseinheit der Sitzsteuerung sowohl ein Empfangselement zum drahtlosen Empfangen von Daten von der gemeinsamen Steuereinheit auf als auch ein Sendeelement zum drahtlosen Senden von Daten an die gemeinsame Steuereinheit. Dadurch ist es auch möglich, die aktuelle Position der Sitzkomponenten eines Sitzes an die gemeinsame Steuereinheit zu übertragen und dort beispielsweise auch anzuzeigen, damit beispielsweise ein Flugbegleiter die zugehörigen Informationen zentral auf einer Anzeigeeinrichtung erfassen kann. Außerdem können auf diesem Wege Diagnosedaten über die Betriebsfähigkeit der Aktuatoren zentral in der gemeinsamen Steuereinheit erfasst, gespeichert und/oder angezeigt werden.

Vorzugsweise weist die Datenübertragungseinheit der gemeinsamen Steuereinheit mehrere, in dem Fahrzeug vorzugsweise räumlich verteilt anordbare Empfangselemente zum drahtlosen Empfangen von Daten von den Sitzsteuerungen der Sitze auf. Dadurch ist es möglich, mit verhältnismäßig geringen Sendeleistungen eine hohe Betriebssicherheit zu gewährleisten. Die Empfangselemente können dabei Relaisstationen bilden, welche die von den Sitzsteuerungen drahtlos empfangenen Daten verstärken, gegebenenfalls aufbereiten und/oder zwischenspeichern, und an die gemeinsame Steuereinheit weiterleiten. Die verteilt anordbaren Empfangselemente können mit der gemeinsamen Steuereinheit grundsätzlich ebenfalls drahtlos verbunden sein, vorzugsweise sind die Empfangselemente jedoch über eine drahtgebundene Datenleitung mit der gemeinsamen Steuereinheit verbunden, insbesondere über ein Stichleitung oder eine Ringleitung.

Die drahtlose Datenübertragung kann durch Funkwellen einschließlich Mikrowellen erfolgen, wobei in diesem Fall die Übertragungsfrequenz vorzugsweise ausreichend beabstandet ist zu den für den Luftverkehr und die Steuerung des Luftfahrzeuges verwendeten Frequenzen. Funkwellen haben den Vorteil, dass die Datenübertragung durch Verschmutzung der Sende- oder Empfangselemente oder durch deren Abdeckung nicht wesentlich beeinträchtigt ist.

Alternativ oder möglicherweise sogar ergänzend kann die drahtlose Datenübertragung durch optische Signalübertragung erfolgen, insbesondere im infraroten Wellenlängenbereich, beispielsweise entsprechend dem Standard der Infra-red Data Association (IrDA). Die optische Signalübertragung hat den Vorteil der hohen elektromagnetischen Verträglichkeit, d.h. Störwirkungen auf andere Systeme des Fahrzeuges sind praktisch ausgeschlossen, wodurch die optische Signalübertragung insbesondere bei erfindungsgemäßen Systemen in Luftfahrzeugen vorteilhaft ist.

In einer besonderen Ausführungsart der Erfindung weist die gemeinsame Steuereinheit eine Anzeigeeinrichtung auf, auf welcher die von den Sitzsteuerungen empfangenen Daten und/oder die an die Sitzsteuerungen zu sendenden Daten anzeigbar sind. Vorzugsweise ist auf der Anzeigeeinrichtung die Anordnung mehrerer oder sogar aller Fahrgastsitze entsprechend ihrer tatsächlichen Anordnung in dem Fahrzeug darstellbar. Dabei können beispielsweise jene Fluggastsitze, die sich in der für den Start oder die Landung vorgeschriebenen Sicherheits-Ausgangsposition befinden, mit einer ersten Farbe, beispielsweise grün, markiert sein, und die anderen Fluggastsitze in einer zweiten Farbe, beispielsweise rot. Entsprechendes gilt für die Anzeige bzw. Diagnose der Betriebsfähigkeit des Fluggastsitzes bzw. dessen Aktuatoren; auch hier kann beispielsweise ein kritischer Betriebszustand, etwa die Diagnose einer Störung, durch eine farbige Markierung des jeweiligen Sitzes angezeigt werden.

Vorzugsweise weist die gemeinsame Steuereinheit ein Touchscreen auf, durch dessen Berühren ein oder mehrere Fluggastsitze auswählbar sind, beispielsweise deren Aktuatoren ansteuerbar oder diagnostizierbar sind, oder deren Software aktualisierbar ist.

Die Erfindung betrifft auch eine gemeinsame Steuereinheit für ein vorstehend beschriebenes erfindungsgemäßes System. Die gemeinsame Steuereinheit kann zentral in dem Fahrzeug angeordnet sein. Alternativ oder ergänzend hierzu kann die gemeinsame Steuereinheit auch portabel sein, d.h. tragbar, insbesondere kann mindestens ein Teil einer fest in dem Fahrzeug installierten gemeinsamen Steuereinheit auch in einem zusätzlich hierzu verfügbaren portablen Gerät realisiert sein, wobei eine solche portable gemeinsame Steuereinheit jedenfalls auch die Möglichkeit hat, mit der Sitzsteuerung der einzelnen Sitze drahtlos Daten auszutauschen.

Ergänzend hierzu kann eine tragbare gemeinsame Steuereinheit auch drahtgebundene Verbindungsmittel zu einer Schnittstelle der Sitzsteuerung aufweisen, um insbesondere bei einem Ausfall der drahtlosen Datenübertragung noch eine Ansteuerung der Aktuatoren zu ermöglichen und/oder ein Auslesen von Diagnosedaten aus der Steuereinheit des betreffenden Sitzes.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt ein erfindungsgemäßes System, und
- Fig. 2: zeigt ein zweites Ausführungsbeispiel der erfindungsgemäßen gemeinsamen Steuereinheit.

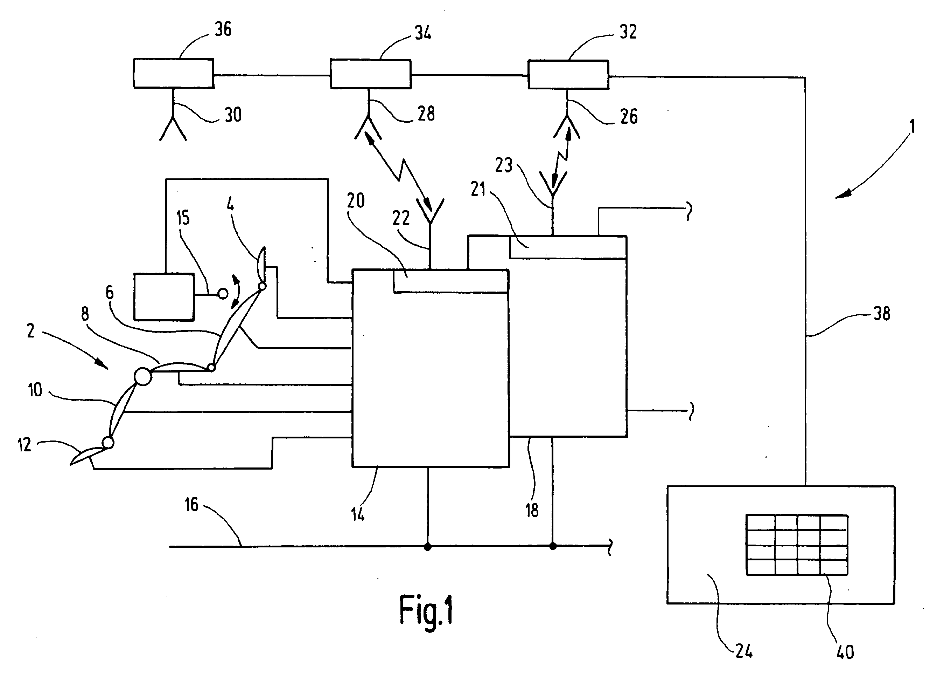

Die Fig. 1 zeigt ein System 1 zur Einstellung der Position mindestens einer Sitzkomponente eines Fluggastsitzes 2 mittels nicht dargestellter Aktuatoren. Im Ausführungsbeispiel sind an dem Fluggastsitz 2 die Positionen der Kopfstütze 4, der Rückenlehne 6, des Sitzteils 8, der Beinauflage 10 und der Fußstütze 12 motorisch durch jeweils mindestens einen Aktuator einstellbar, wobei innerhalb vorgebbarer Grenzen auch die Bewegungen der einzelnen Sitzkomponenten miteinander gekoppelt sein können. Die Aktuatoren werden von einer lokal an dem Fluggastsitz 2 angeordneten Sitzsteuerung 14 angesteuert, die von einem Fluggast mittels des Bedienelements 15, beispielsweise eines Steuerknüppels oder Steuertasten, betätigt werden kann. Die Sitzsteuerung 14 weist neben einer elektronischen Steuerung auch Elemente der Leistungselektronik für die Ansteuerung der Aktuatoren auf, und ist außerdem an eine Energieversorgungsleitung 16 angeschlossen.

In entsprechender Weise sind für die weiteren Fluggastsitze jeweils zugehörige weitere Sitzsteuerungen 18 vorgesehen, die ebenfalls an die Energieversorgungsleitung 16 angeschlossen sind und im Wesentlichen untereinander identisch und insbesondere austauschbar ausgebildet sind, weshalb nachfolgend lediglich die Sitzsteuerung 14 weiter beschrieben ist.

Die Sitzsteuerung 14 weist eine Datenübertragungseinheit 20 auf, die mit einer Sende- und Empfangsantenne 22 verbunden ist. Auf diesem Wege können zwischen den Sitzsteuerungen 14, 18 von mehreren Fluggastsitzen 2 und einer gemeinsamen Steuereinheit 24 Daten betreffend die Position der Sitzkomponenten und/oder Daten betreffend die Ansteuerung der Aktuatoren übertragen werden.

Im dargestellten Ausführungsbeispiel weist die gemeinsame Steuereinheit 24 hierfür verteilt angeordnete Sende- und Empfangselemente 26, 28, 30 auf, die Teil der verteilt angeordneten Datenübertragungseinheit 32, 34, 36 der gemeinsamen Steuereinheit 24 sind. Insbesondere sind die Sende- und Empfangselemente 26, 28, 30 jeweils einer Relaisstation zugeordnet, die in der Darstellung der Fig. 1 in den Teilen der Datenübertragungseinheit 32, 34, 36 integriert sind, und die über eine Stichleitung 38 mit der gemeinsamen Steuereinheit 24 drahtgebunden verbunden sind. In den Relaisstationen werden sowohl die von der gemeinsamen Steuereinheit 24 erhaltenen Daten zur Übertragung an die Antennen 22 der Sitzsteuerung 14 aufbereitet, insbesondere verstärkt, und umgekehrt die von den Antennen 22 der Sitzsteuerungen 14 empfangenen Daten verstärkt und auf die Verbindungsleitung 38 zur Weiterleitung an die gemeinsame Steuereinheit 24 gegeben.

Die Antenne 22 kann beispielsweise Daten der Sitzsteuerung 14 betreffend die aktuelle Position der Sitzkomponenten des Fluggastsitzes 2 an die Antenne 28 übertragen, damit diese Daten an einer Anzeigeeinrichtung 40 der gemeinsamen Steuereinheit 24, insbesondere an einem dort angeordneten Touchscreen, anzeigbar sind. Bei den von der Antenne 22 der Sitzsteuerung 14 übertragenen Daten kann es sich auch um Diagnosedaten betreffend den Betriebszustand der zum Sitz 2 zugehörigen Aktuatoren handeln. Ebenso kann die Antenne 23 der weiteren Sitzsteuerung 18 Daten von der Sendeantenne 26 der zugehörigen Relaisstation empfangen, beispielsweise Daten betreffend die Ansteuerung der Aktuatoren des zur weiteren Sitzsteuerung 18 zugehörigen Sitzes.

Das in der Fig. 1 dargestellte Ausführungsbeispiel zeigt eine drahtlose Datenübertragung mittels Funkwellen. Dabei ist es möglich, dass die Datenübertragungseinheiten 20, 21 der Sitzsteuerungen 14, 18 jeweils auf individuellen Frequenzen senden und/oder empfangen. Dies stellt insbesondere erhöhte Anforderungen an die Sende- und Empfangsantennen 26, 28, 30 der gemeinsamen Steuereinheit 24, welche so ausgestaltet sein müssen, dass sie alle in Frage kommenden Frequenzen empfangen können.

Alternativ zu einem solchen Frequenzmultiplex-Übertragungsverfahren kommt auch ein Zeitmultiplex-Übertragungsverfahren in Betracht, bei dem jeder Sitzsteuerung 14, 18 ein bestimmter Zeitschlitz in einem Zeitrahmen von beispielsweise 100 ms Dauer fest zugeordnet ist und diese Zuordnung zuvor fest vereinbart ist. Eine weitere Möglichkeit, die in vielen Anwendungsfällen zu bevorzugen ist, besteht darin, dass jedem zu übertragenden Datenpaket ein Adress- und Absenderfeld hinzugefügt wird, das sowohl den Absender eindeutig identifiziert, beispielsweise die Sitzsteuerung 14, als auch das Ziel bzw. den Adressaten eindeutig identifiziert, beispielsweise die gemeinsame Steuereinheit 24.

In jedem der vorstehend beschriebenen Übertragungsverfahren können die Empfangsantennen 26, 28, 30 und/oder die jeweils zugehörige Relaisstation für eine Synchronisierung der Datenübertragung auf der Verbindungsleitung 38 sorgen. Beispielsweise kann jede Relaisstation die von der Sitzsteuerung 14, 18 empfangenen Daten zwischenspeichern und synchron der Verbindungsleitung 38 zuführen, und gleichzeitig gewährleisten, dass keine Signalkollision durch einen gleichzeitigen Zugriff mehrerer Relaisstationen 32, 34, 36 auf die Verbindungsleitung 38 infolge gleichzeitigem Senden von mehreren Sitzsteuerungen 14, 18 auftritt.

Die gemeinsame Steuereinheit 24 kann über die Verbindungsleitung 38 und die drahtlose Datenübertragung einzelne Aktuatoren bestimmter Sitze 2 ansteuern oder diagnostizieren. Auch die Funktionsfähigkeit der Sitzsteuerung 14, 18 kann diagnostiziert werden. Mögliche Fehlerursachen können so ermittelt werden und an der Anzeigeeinrichtung 14 dargestellt werden oder auf sonstige Weise signalisiert werden. Außerdem ist es möglich, Modifikationen in der Steuersoftware der Sitzsteuerungen 14, 18 zentral über die gemeinsame Steuereinheit 24 auf einzelne oder alle Sitzsteuerungen 14, 18 aufzuspielen.

In Abwandlung der in der Fig. 1 dargestellten Übertragung durch Funkwellen ist auch eine drahtlose Übertragung auf optischem Wege möglich, insbesondere im infraroten Wellenlängenbereich. Dabei können die Sende- und Empfangselemente der Sitzsteuerung 14, 18 vorzugsweise auf einer Oberseite der Rückenlehne 6 oder der Kopfstütze 4 angeordnet sein, um eine möglichst störungsfreie Verbindung mit den Sende- und Empfangselementen der gemeinsamen Steuereinheit zu gewährleisten. Die Datenübertragungseinheit der gemeinsamen Steuereinheit kann ähnlich wie in der Fig. 1 dargestellt verteilt angeordnet sein, beispielsweise können die Fluggastsitze 2 gruppenweise jeweils einer Datenübertragungseinheit 26, 28, 30 zugeordnet sein. Diese Zuordnung kann fest vorgegeben sein oder vorzugsweise in die Sitzsteuerung 14, 18 und/oder die gemeinsame Steuereinheit 24 programmierbar sein und damit insbesondere veränderbar sein.

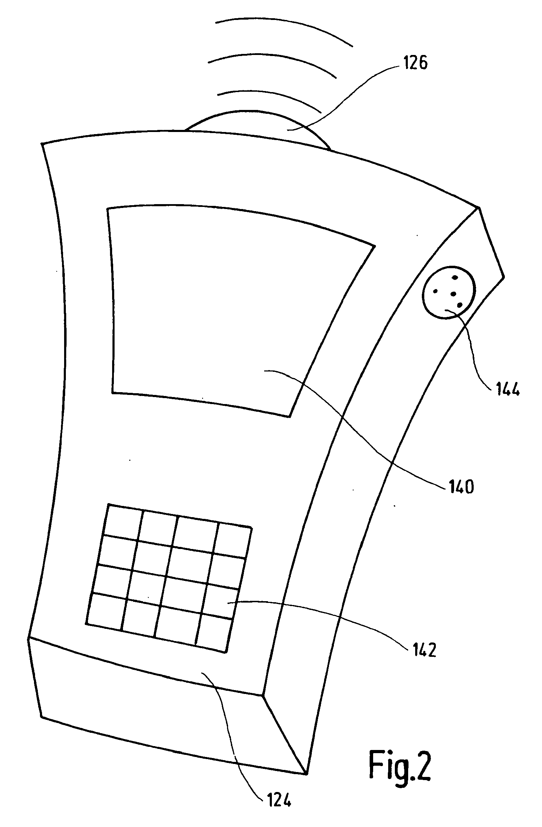

Die Fig. 2 zeigt ein zweites Ausführungsbeispiel der erfindungsgemäßen gemeinsamen Steuereinheit 124, die portabel ist, und dadurch beispielsweise auch von einem Flugbegleiter unmittelbar an dem Ort der zu steuernden oder zu diagnostizierenden Sitzsteuerung bzw. der zugehörigen Aktuatoren des betreffenden Fluggastsitzes 2 gebracht werden können. Zu diesem Zweck weist auch die portable gemeinsame Steuereinheit 124 eine Anzeigeeinrichtung 140 auf, die ebenfalls als Touchscreen ausgebildet sein kann. Alternativ oder ergänzend weist die portable Steuereinheit 124 weitere Eingabemittel 142 auf, beispielsweise eine Tastatur, ein Touchpad oder dergleichen. Für die drahtlose Datenübertragung weist die portable Steuereinheit 124 an ihrer Frontseite eine Sende- und Empfangsdiode 126 auf für eine optische Signalübertragung im infraroten Wellenlängenbereich, insbesondere eine Leuchtdiode zum Senden und eine Photodiode zum Empfangen. Ergänzend zur drahtlosen Datenübertragung ist es mit der portablen Steuereinheit 124 auch möglich, mittels der Steckverbindung 144 und einem zugehörigen Verbindungskabel auch eine drahtgebundene Verbindung zur Datenübertragung mit der Sitzsteuerung 14, 18 des jeweiligen Fluggastsitzes 2 herzustellen.

## Patentansprüche

1. System (1) zur Einstellung der Position mindestens einer Sitzkomponente, wie beispielsweise Kopfstütze (4), Rückenlehne (6), Sitzteil (8), Beinauflage (10) oder Fußstütze (12), eines Fahrgastsitzes (2) eines Fahrzeuges, insbesondere eines Fluggastsitzes eines Luftfahrzeuges, mittels Aktuatoren, wobei lokal an dem Fahrgastsitz (2) eine Sitzsteuerung (14, 18) anordbar ist mit mindestens einem von dem Fahrgast zu betätigenden Bedienelement (15), und wobei zwischen den Sitzsteuerungen (14, 18) von mehreren Fahrgastsitzen (2), vorzugsweise von allen Fahrgastsitzen (2) des Fahrzeuges, und einer gemeinsamen Steuereinheit (24; 124) Daten übertragbar sind, einschließlich Daten betreffend die Position der Sitzkomponenten und/oder Daten betreffend die Ansteuerung der Aktuatoren, **dadurch gekennzeichnet, dass** die Sitzsteuerung (14, 18) und die gemeinsame Steuereinheit (24; 124) jeweils eine Datenübertragungseinheit (20, 21, 32, 34, 36) zur drahtlosen Datenübertragung aufweisen.

2. System (1) nach Anspruch 1, **dadurch gekennzeichnet, dass** die Datenübertragungseinheit (20, 21) der Sitzsteuerung (14, 18) sowohl ein Empfangselement (22, 23) zum drahtlosen Empfangen von Daten von der gemeinsamen Steuereinheit (24; 124) aufweist als auch ein Sendeelement (22, 23) zum drahtlosen Senden von Daten an die gemeinsame Steuereinheit (24; 124) aufweist.

3. System (1) nach Anspruch 1 oder 2, **dadurch gekennzeichnet, dass** die Datenübertragungseinheit (32, 34, 36) der gemeinsamen Steuereinheit (24; 124) mehrere, in dem Fahrzeug räumlich verteilt anordbare Empfangselemente (26, 28, 30) zum drahtlosen Empfangen von Daten von den Sitzsteuerungen (14, 18) der Fahrgastsitze aufweist.

4. System (1) nach Anspruch 3, **dadurch gekennzeichnet, dass** die verteilt angeordneten Empfangselemente (26, 28, 30) an Relaisstationen angeschlossen sind, welche die von den Sitzsteuerungen (14, 18) drahtlos empfangenen Daten verstärken und an die gemeinsame Steuereinheit (24; 124) weiterleiten.

5. System (1) nach Anspruch 3 oder 4, **dadurch gekennzeichnet, dass** die verteilt angeordneten Empfangselemente (26, 28, 30) mit der gemeinsamen Steuereinheit (24; 124) über eine drahtgebundene Datenleitung (38) verbunden sind.

6. System (1) nach einem der Ansprüche 1 bis 5, **dadurch gekennzeichnet, dass** die drahtlose Datenübertragung durch Funkwellen erfolgt.

7. System (1) nach Anspruch 6, **dadurch gekennzeichnet, dass** die Übertragungsfrequenz ausreichend beabstandet ist zu den für den Verkehr, insbesondere Luftverkehr, und die Steuerung des Fahrzeuges, insbesondere des Luftfahrzeuges, verwendeten Frequenzen.

8. System (1) nach einem der Ansprüche 1 bis 7, **dadurch gekennzeichnet, dass** die drahtlose Datenübertragung durch optische Signalübertragung erfolgt, insbesondere im infraroten Wellenlängenbereich.

9. System (1) nach einem der Ansprüche 1 bis 8, **dadurch gekennzeichnet, dass** die gemeinsame Steuereinheit (24; 124) eine Anzeigeeinrichtung (40; 140) aufweist, auf welcher die von den Sitzsteuerungen (14, 18) empfangenen Daten und/oder die an die Sitzsteuerungen (14, 18) zu sendenden Daten anzeigbar sind.

10. System (1) nach einem der Ansprüche 1 bis 9, **dadurch gekennzeichnet, dass** die gemeinsame Steuereinheit (24; 124) einen Touchscreen (40; 140) aufweist, durch dessen Berühren ein oder mehrere Fahrgastsitze (2) auswählbar sind.

11. Gemeinsame Steuereinheit (24; 124) für ein System (1) zur Einstellung der Position mindestens einer Sitzkomponente, wie beispielsweise Kopfstütze (4), Rückenlehne (6), Sitzteil (8), Beinauflage (10) oder Fußstütze (12) eines Fahrgastsitzes (2) eines Fahrzeuges, insbesondere eines Fluggastsitzes eines Luftfahrzeuges, mittels Aktuatoren, wobei lokal an dem Fahrgastsitz (2) eine Sitzsteuerung (14, 18) anordbar ist mit mindestens einem von dem Fahrgast zu betätigenden Bedienelement (15), und wobei zwischen den Sitzsteuerungen (14, 18) von mehreren Fahrgastsitzen (2), vorzugsweise von allen Fahrgastsitzen (2) des Fahrzeuges, und der gemeinsamen Steuereinheit (24; 124) Daten betreffend die Position der Sitzkomponenten und/oder Daten betreffend die Ansteuerung der Aktuatoren übertragbar sind, **dadurch gekennzeichnet, dass** die gemeinsame Steuereinheit (24; 124) eine Datenübertragungseinheit (32, 34, 36) aufweist, mittels der die Daten betreffend die Position der Sitzkomponenten und/oder betreffend die Ansteuerung der Aktuatoren von und/oder zu einer Datenübertragungseinheit (20, 21) der Sitzsteuerung (14, 18) drahtlos übertragbar sind.

12. Gemeinsame Steuereinheit (24; 124) nach Anspruch 11, **dadurch gekennzeichnet, dass** die gemeinsame Steuereinheit (24; 124) portabel ist.

## Claims

1. System (1) for adjusting the position of at least one seat component such as for example the head rest (4), the back rest (6), the seat part (8), the leg rest (10) or the foot rest (12) of a vehicle passenger seat (2) of a vehicle, in particular an airplane passenger seat of an airplane, by means of actuators, whereby a seat controller (14, 18) with at least one operating element (15) to be activated by the passenger can be positioned locally in the vehicle passenger seat (2), and whereby data including data relating to the position of the seat components and/or data relating to the control of the actuators can be transmitted between the seat controllers (14, 18) of several vehicle passenger seats (2), and preferably all vehicle passenger seats (2) of the vehicle, and a common control unit (24; 124), **characterised in that** the seat controller (14, 18) and the common control unit (24; 124) each comprise a data transmission unit (20, 21, 32, 34, 36) for the wireless transmission of data.

2. System (1) according to Claim 1, **characterised in that** the data transmission unit (20, 21) of the seat controller (14, 18) comprises a receiving element (22, 23) for the wireless reception of data from the common control unit (24; 124) as well as a transmission element (22, 23) for the wireless transmission of data to the common control unit (24; 124).

3. System according to Claim 1 or 2, **characterised in that** the data transmission unit (32, 34, 36) of the common control unit (24; 124) comprises several receiving elements (26, 28, 30) separately positioned within the vehicle for the wireless receipt of data from the seat controllers (14, 18) of the vehicle passenger seats.

4. System according to Claim 3, **characterised in that** the separately positioned receiving elements (26, 28, 30) are connected to relay stations amplifying the wirelessly received data from the seat controllers (14, 18) and transmitting the same to the common control unit (24; 124).

5. System (1) according to Claim 3 or 4, **characterised in that** the separately positioned receiving elements (26, 28, 30) are connected with the common control unit (24; 124) via a hard wired data line (38).

6. System (1) according to one of the Claims 1 to 5, **characterised in that** the wireless data transmission is realised by means of radio waves.

7. System (1) according to Claim 6, **characterised in that** the transmission frequency is sufficiently different from the frequencies used for traffic control, in particular air traffic control, and the control of the vehicle, in particular the airplane.

8. System (1) according to one of the Claims 1 to 7, **characterised in that** the wireless data transmission is realised by means of optical signal transmission, in particular within the infrared wavelength range.

9. System (1) according to one of the Claims 1 to 8, **characterised in that** the common control unit (24; 124) comprises a display means (40; 140), on which the data received from the seat controllers (14, 18) and/or the data to be transmitted to the seat controllers (14, 18) can be displayed.

10. System (1) according to one of the Claims 1 to 9, **characterised in that** the common control unit (24; 124) comprises a touch screen (40; 140), the touching of which enables a selection of one or more vehicle passenger seats (2).

11. Common control unit (24; 124) for a system (1) for adjusting the position of at least one seat component such as for example the head rest (4), the back rest (6), the seat part (8), the leg rest (10) or the foot rest (12) of a vehicle passenger seat (2) of a vehicle, in particular an airplane passenger seat, by means of actuators, whereby a seat controller (14, 18) with at least one operating element (15) to be activated by the passenger can be positioned locally in the vehicle passenger seat (2), and whereby data relating to the position of the seat components and/or data relating to the control of the actuators can be transmitted between the seat controllers (14, 18) of several vehicle passenger seats (2), and preferably of all vehicle passenger seats (2) of the vehicle and the common control unit (24; 124), **characterised in that** the common control unit (24; 124) comprises a data transmission unit (32, 34, 36) with which the data relating to the position of the seat components and/or relating to the control of the actuators can be wirelessly transmitted from and/or to a data transmission unit (20, 21) of the seat controller (14, 18).

12. Common control unit (24; 124) according to Claim 11, **characterised in that** the common control unit (24; 124) is portable.

## Revendications

1. Système (1) de réglage de la position d'au moins un composant de siège, tel que par exemple un apppuie-tête (4), un dossier (6), une assise (8), un repose-jambes (10) ou un repose-pieds (12), d'un siège (2) pour passager d'un véhicule, en particulier d'un siège pour passager d'un avion, à l'aide d'actionneurs, dans lequel un système de commande de siège (14, 18) peut être disposé localement sur le siège (2) pour passager, en ayant au moins un élément de manoeuvre (15) pouvant être actionné par le passager, et dans lequel des données peuvent être transmises entre les systèmes de commande de siège (14, 18) d'une pluralité de sièges (2) pour passager, de préférence de tous les sièges (2) pour passager du véhicule, et une unité de commande (24 ; 124) commune, y compris des données concernant la position des composants de siège et/ou des données concernant la commande des actionneurs, **caractérisé en ce que** le système de commande de siège (14, 18) et l'unité de commande (24 ; 124) commune ont chacun une unité de transmission de données (20, 21, 32, 34, 36) pour transmettre des données sans fil.

2. Système (1) selon la revendication 1, **caractérisé en ce que** l'unité de transmission de données (20, 21) du système de commande de siège (14, 18) a aussi bien un élément récepteur (22, 23) pour recevoir sans fil des données provenant de l'unité de commande (24 ; 124) commune qu'également un élément émetteur (22, 23) pour émettre sans fil des données à l'unité de commande (24 ; 124) commune.

3. Système (1) selon la revendication 1 ou 2, **caractérisé en ce que** l'unité de transmission de données (32, 34, 36) de l'unité de commande (24 ; 124) commune a une pluralité d'éléments récepteurs (26, 28, 30) pouvant être disposés de manière répartie spatialement dans le véhicule pour recevoir sans fil des données provenant des systèmes de commande de siège (14, 18) des sièges pour passager.

4. Système (1) selon la revendication 3, **caractérisé en ce que** les éléments récepteurs (26, 28, 30) disposés de manière répartie sont raccordés à des stations de relais qui amplifient les données reçues sans fil des systèmes de commande de siège (14, 18) et les relayent à l'unité de commande (24 ; 124) commune.

5. Système (1) selon la revendication 3 ou 4, **caractérisé en ce que** les éléments récepteurs (26, 28, 30) disposés de manière répartie sont reliés à l'unité de commande (24 ; 124) commune par une ligne de données (38) câblée.

6. Système (1) selon l'une des revendications 1 à 5, **caractérisé en ce que** la transmission de données sans fil s'effectue au moyen d'ondes radioélectriques.

7. Système (1) selon la revendication 6, **caractérisé en ce que** la fréquence de transmission est suffisamment distantes des fréquences utilisées pour le trafic, en particulier le trafic aérien, et la commande du véhicule, en particulier de l'avion.

8. Système (1) selon l'une des revendications 1 à 7, **caractérisé en ce que** la transmission de données sans fil s'effectue par voie de transmission optique de signaux, en particulier dans le domaine des longueurs d'onde infrarouge.

9. Système (1) selon l'une des revendications 1 à 8, **caractérisé en ce que** l'unité de commande (24 ; 124) commune a un dispositif d'affichage (40 ; 140), sur lequel peuvent être affichées les données reçues par les systèmes de commande de siège (14, 18) et/ou les données devant être émises aux systèmes de commande de siège (14, 18).

10. Système (1) selon l'une des revendications 1 à 9, **caractérisé en ce que** l'unité de commande (24 ; 124) commune a un écran tactile (40 ; 140) qui permet, lorsqu'on le touche, de choisir un ou plusieurs sièges (2) pour passager.

11. Unité de commande (24 ; 124) commune pour un système (1) de réglage de la position d'au moins un composant de siège, tel que par exemple un apppuie-tête (4), un dossier (6), une assise (8), un repose-jambes (10) ou un repose-pieds (12) d'un siège (2) pour passager d'un véhicule, en particulier d'un siège pour passager d'un avion, à l'aide d'actionneurs, dans lequel un système de commande de siège (14, 18) peut être disposé localement sur le siège (2) pour passager, en ayant au moins un élément de manoeuvre (15) pouvant être actionné par le passager, et dans lequel des données concernant la position des composants de siège et/ou des données concernant la commande des actionneurs peuvent être transmises entre les systèmes de commande de siège (14, 18) d'une pluralité de sièges (2) pour passager, de préférence de tous les sièges (2) pour passager du véhicule, et l'unité de commande (24 ; 124) commune, **caractérisée en ce que** l'unité de commande (24 ; 124) commune a une unité de transmission de données (32, 34, 36) au moyen de laquelle peuvent être transmises sans fil les données concernant la position des composants de siège et/ou concernant la commande des actionneurs, données qui proviennent d'une unité de transmission de données (20, 21) du système de commande de siège (14, 18) et/ou qui sont émises à celle-ci.

12. Unité de commande (24 ; 124) commune selon la revendication 11, **caractérisée en ce que** l'unité de commande (24 ; 124) commune est portative.
